# EUROPEAN PATENT APPLICATION

(11) **EP 4 443 620 A2**
(43) Date of publication of application: **09.10.2024**
(21) Application number: 24168290.5
(22) Date of filing: 03.04.2024
(51) Int. Cl.: H01M 50/204, H01M 50/271, H01M 50/572, H01M 50/591

(54) **FIRE AND EXPLOSION PROTECTION SYSTEM FOR BATTERY PACK**

(30) Priority: 03.04.2023 US 202363493813 P
(71) Applicant: Carrier Corporation, Palm Beach Gardens, FL 33418 (US)
(72) Inventor: CHAPEAU, Lucas, Isneauville (FR)
(74) Representative: Dehns

(57) **Abstract**

The battery pack system (100) comprises a casing (102) having an interior and comprising at least one opening (104), and at least one cover (106) disposed in the casing interior and movably configured at the at least one opening (104), such that one of the at least one cover (106) is associated with one of the opening (104). In an event of a hazard in the interior of the battery pack system (100), the at least one cover (106) is configured to move to a closed position to close the at least one opening (104) of the casing (102). The battery pack system (100) comprises an actuation (108) assembly configured with the at least one cover (106). The actuation assembly is configured to keep the at least one cover (108) in an open position during a non-hazard condition, and move the at least one cover (106) to the closed position in the event of the hazard.

## Description

### CROSS-REFERENCE TO RELATED APPLICATION

This patent application claims the benefit of US Provisional Patent Application No. 63/493,813, filed on Apr 03, 2023, which is incorporated by reference herein in its entirety.

### BACKGROUND

This invention relates to the field of battery packs, and more particularly, a fire and explosion protection system for battery packs.

A battery pack is generally equipped with openings on the housing of the battery pack. In an event of a fire or explosion hazard within the housing of the battery pack, internal components of the battery pack and/or pressure waves or fire caused by the hazard may project out of the casing through the openings.

### SUMMARY

Described herein is a battery pack system. The battery pack system comprises a casing having an interior and comprising at least one opening, and at least one cover disposed in the casing interior and movably configured at the at least one opening, such that one of the cover is associated with one of the opening, wherein, in an event of a hazard in the interior of the battery pack system, the at least one cover is configured to move to a closed position to close the at least one opening of the casing.

Optionally, the battery pack system comprises an actuation assembly configured with the at least one cover, wherein the actuation assembly is configured to keep the at least one cover in an open position during a non-hazard condition, and move the at least one cover to the closed position in the event of the hazard.

Optionally, the actuation assembly comprises a pressure-sensitive retainer comprising a first end coupled to the cover and a second end configured at the corresponding opening in the interior of the casing, wherein the retainer is adapted to retain the cover at the open position during the non-hazard condition, and wherein, in the event of the hazard, the retainer is adapted to be compressed or deformed by pressure waves generated by the hazard to move the cover to the closed position.

Optionally, the pressure-sensitive retainer comprises one or more of a hinge, a spring, and a shearing device.

Optionally, the actuation assembly comprises at least one biasing element, each comprising a first end coupled to the cover and a second end configured at the corresponding opening in the interior of the casing, and a temperature-sensitive element comprising a first end coupled to the cover and a second end configured at the corresponding opening in the interior of the casing, wherein, during the non-hazard condition, the temperature-sensitive element is adapted to retain the cover at the open position against a biasing force of the at least one biasing element, and in the event of the hazard, the temperature-sensitive element is adapted to deform or break and correspondingly enable the at least one biasing element to pull the cover to the closed position.

Optionally, the temperature-sensitive element is a bulb filled with a fluid that is adapted to explode and break the bulb when temperature of the fluid exceeds a predefined temperature.

Optionally, the temperature-sensitive element comprises a fusible link having a predefined melting point, wherein the fusible link is adapted to deform when a temperature of the fusible link exceeds the predefined melting point.

Optionally, the at least one cover comprises a movable plate rotatably mounted about an axis at the at least one opening of the casing, and the actuation assembly comprises a biasing element attached to a wall in the interior of the casing; and a retainer comprising a first end connected to the movable plate and a second end connected to the biasing element, wherein, during the non-hazard condition, the biasing element and the retainer are adapted to retain the plate at the open position, and in the event of the hazard, the retainer is adapted to deform or break which correspondingly detaches the biasing element from the plate to release the plate and allow rotation of the plate about the axis to move the cover to the closed position.

Optionally, the hazard comprises one or more of an occurrence of fire in the interior of the casing, an increase in temperature of the interior of the casing above a predefined temperature, and an occurrence of an explosion in the interior of the casing of the battery pack system.

Also described herein is a hazard protection system for a battery pack. The system comprises at least one cover adapted to be movably configured at least at one opening of a casing associated with the battery pack in an interior of the casing, such that one of the cover is configured with one of the opening, wherein, in an event of a hazard in the interior of the battery pack, the at least one cover is configured to move to a closed position to close the at least one opening of the casing.

Optionally, the system comprises an actuation assembly configured with the at least one cover, wherein the actuation assembly is configured to keep the at least one cover in an open position during a non-hazard condition, and move the at least one cover to the closed position in the event of the hazard.

Optionally, the actuation assembly comprises a pressure-sensitive retainer comprising a first end coupled to the cover and a second end configured at the corresponding opening in the interior of the casing, wherein the retainer is adapted to retain the cover at the open position during the non-hazard condition, and wherein, in the event of the hazard, the retainer is adapted to be compressed or deformed by pressure waves generated by the hazard to move the cover to the closed position.

Optionally, the pressure-sensitive retainer comprises one or more of a hinge, a spring, and a shearing device.

Optionally, the actuation assembly comprises at least one biasing element, each comprising a first end coupled to the cover and a second end configured at the corresponding opening in the interior of the casing, and a temperature-sensitive element comprising a first end coupled to the cover and a second end configured at the corresponding opening in the interior of the casing, wherein, during the non-hazard condition, the temperature-sensitive element is adapted to retain the cover at the open position against a biasing force of the at least one biasing element, and in the event of the hazard, the temperature-sensitive element is adapted to deform or break and correspondingly enable the at least one biasing element to pull the cover to the closed position.

Optionally, the temperature-sensitive element is a bulb filled with a fluid that is adapted to explode and break the bulb when a temperature of the fluid exceeds a predefined temperature.

Optionally, the temperature-sensitive element comprises a fusible link having a predefined melting point, wherein the fusible link is adapted to deform when temperature of the fusible link exceeds the predefined melting point.

Optionally, the at least one cover comprises a movable plate rotatably mounted about an axis at the at least one opening of the casing, and the actuation assembly comprises a biasing element attached to a wall in the interior of the casing; and a retainer comprising a first end connected to the movable plate and a second end connected to the biasing element, wherein, during the non-hazard condition, the biasing element and the retainer are adapted to retain the plate at the open position, and in the event of the hazard, the retainer is adapted to deform or break which correspondingly detaches the biasing element from the plate to release the plate and allow rotation of the plate about the axis to move the cover to the closed position.

Optionally, the hazard comprises one or more of an occurrence of fire in the interior of the casing, an increase in temperature of the interior of the casing above a predefined temperature, and an occurrence of an explosion in the interior of the casing of the battery pack.

Further described herein is a hazard protection system for a device. The system comprises at least one cover adapted to be movably configured at least at one opening associated with a casing of the device in an interior of the casing, such that one of the covers is configured with the at least one opening, wherein, in an event of a hazard in the interior of the battery pack, the at least one cover is configured to move to a closed position to close the at least one opening of the casing.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention. The drawings illustrate exemplary embodiments of the subject invention and, together with the description, serve to explain the principles of theinvention. However, the scope of invention is defined only by the claims.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A and 1B illustrate exemplary views of a battery pack system having a counter spring plate (pressure-sensitive retainer with a plate), in an open position and a closed position, respectively.
FIGs. 2A and 2B illustrate exemplary views of a battery pack system having a temperature-sensitive element, in an open position and a closed position, respectively.
FIG. 3A and 3B illustrate exemplary views of a battery pack system having a circular closure plate, in an open position and a closed position, respectively.

### DETAILED DESCRIPTION

The following is a detailed description of embodiments depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives of the described embodiments falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this subject disclosure described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, as the battery pack, casing, actuation assembly, movable plate, biasing element, retainer, heat-sensitive element, pressure-sensitive element, and corresponding components, described herein may be oriented in any desired direction.

Battery packs have a casing (or enclosure) that encloses the battery cells and other components of the battery pack. The battery pack may be provided with openings on the casing to facilitate the flow of air inside the casing to keep the internal components of the battery pack cool. However, in an event of a hazard such as fire or explosion within the battery pack casing, the internal components of the battery pack and/or the pressure waves and fire caused by the explosion may project out of the casing through the openings of the casing There is a need to restrict the projection of the internal components and/or the pressure waves and fire out of the battery pack casing in the event of fire or explosion in the interior of the casing.

This subject disclosure provides a simple, reliable, efficient, and cost-effective hazard protection system that may be installed at openings of a battery pack casing to restrict the projection of the internal components and/or the pressure waves and fire out of the battery pack casing in the event of fire or explosion in the interior of the casing. The battery pack may include at least one cover or plate movably configured at the openings in the interior of the battery pack casing. The battery pack may further comprise an actuation assembly configured with the covers at each opening. During a non-hazard (normal operating) condition, the actuation assembly may be configured to keep the covers in an open position to allow cooling of the internal components of the battery pack. However, in the event of a fire or explosion hazard, the actuation assembly may move the covers or trigger the movement of the covers to the closed position, thereby closing the openings of the casing and restricting the projection of the internal components and/or the pressure waves and fire out of the battery pack casing through the openings. Moreover, as all the openings of the casing are closed by the covers in the event of a fire or explosion hazard, the oxygen supply to the battery pack interior may be reduced or cut off, which may facilitate extinguishing the fire inside the casing.

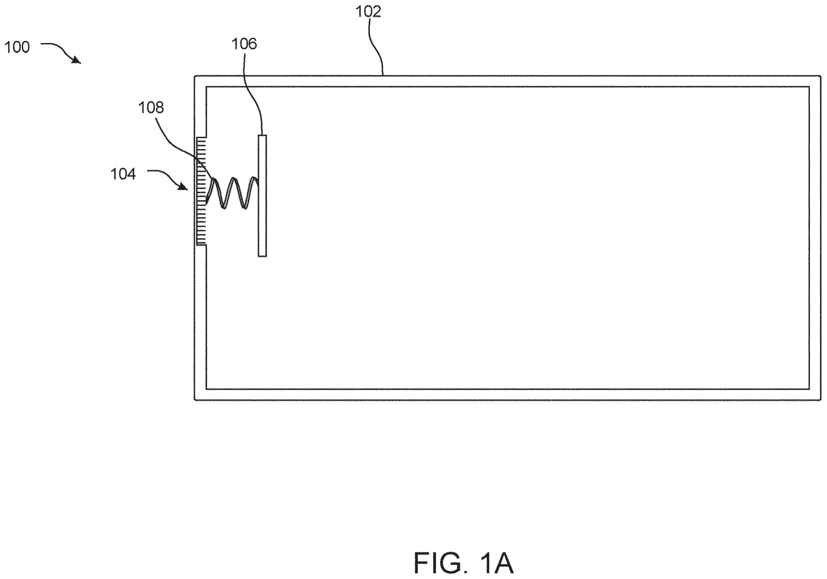

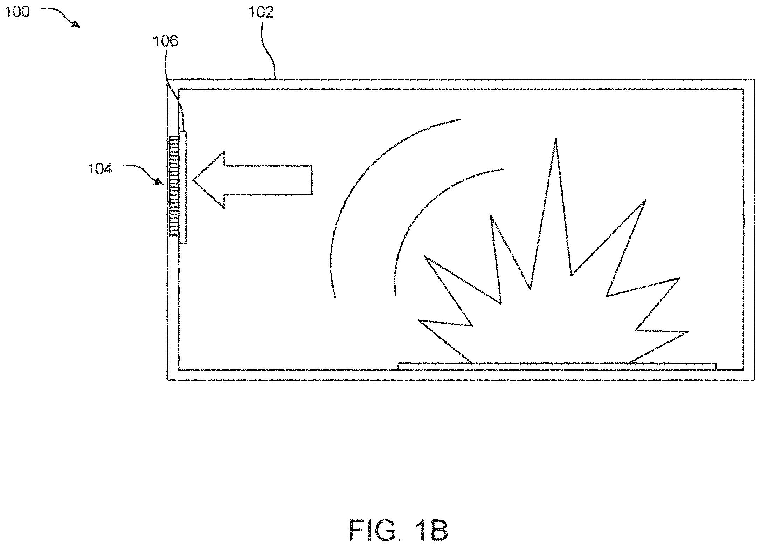

Referring to FIGs. 1A and 1B, a battery pack system "system" 100 having a counter spring plate (pressure-sensitive retainer with a plate) is disclosed. The battery pack system 100 may include a casing 102 (also referred to as enclosure or housing 102, herein) that may accommodate battery module(s) and one or more components (not shown) associated with the battery pack system 100. The battery pack system 100 may include at least one opening 104 (collectively referred to as openings 104 or individually referred to as an opening 104, herein) to facilitate the flow of air within the casing 102 to keep the interior of the casing 102 cool. The casing 102 may be of a predefined dimension based on the capacity of the battery pack 100 and the space where the battery pack 100 is to be installed.

The battery pack system 100 may further include at least one cover 106 or plates 106 (collectively referred to as covers 106 or plates 106 or individually referred to as cover 106 or plate 106, herein) movably configured at the openings 104 in the interior of the casing 102, such that one of the covers 106 is associated with each of the openings 104. The battery pack system 100 may be equipped with a protection system that automatically moves the cover 106 to a closed position as shown in FIG. 1B to close the openings 104 of the casing 102 in an event of a hazard in the interior of the battery pack system 100. The protection system may be an integral part of the battery pack system 100 or may be retrofitted in the casing 102 of the battery pack system 100. The hazard may be an occurrence of fire in the interior of the casing 102, an increase in temperature of the interior of the casing 102 above a predefined temperature, an occurrence of an explosion in the interior of the casing 102 of the battery pack system 100, or a combination thereof, but is not limited to the like. For example, the predefined temperature may be greater than or equal to 600 degrees Fahrenheit, however, the predefined temperature is not limited to the like.

The battery pack system 100 or the protection system may include an actuation assembly configured with the covers 106. The actuation assembly may be configured to keep the covers 106 in an open position to keep the openings 104 uncovered during a non-hazard condition as shown in FIG. 1A, and further move the covers 106 to the closed position to close the openings 104 in the event of a hazard as shown in FIG. 1B. In the open position, the uncovered openings 104 of the casing 102 may allow ambient air to flow within or through the interior of the casing 102 to facilitate the cooling of the battery pack system 100. Moreover, in the closed position, the covers 106 may completely close the openings 104 of the casing 102, thereby restricting the projection of the internal components and/or the pressure waves and fire out of the battery pack system 100 casing 102 through the openings 104. In addition, as all the openings 104 of the casing 102 get closed by the covers 106, the oxygen supply to the battery pack system 100 interior may be reduced or cut off, which may facilitate extinguishing the fire inside the casing 102.

In one or more embodiments, the actuation assembly may include at least one pressure-sensitive retainer 108 comprising a first end coupled to the cover 106 and a second end disposed at the corresponding opening 104 in the interior of the casing 102. The pressure-sensitive retainer 108 may include one or more of a hinge, a spring, a shearing device, and the like. The retainer 108 may be adapted to retain or keep the cover 106 in the open position during the non-hazard (normal operating) condition. Further, in the event of fire or explosion hazard, the retainer 108 may get compressed or deformed by the pressure waves generated by the explosion, which also moves the cover 106 from the open position to the closed position to completely close the openings 104 of the casing 102, thereby restricting the projection of the internal components and/or the pressure waves and fire out of the casing 102 through the openings 104.

In one or more embodiments, the cover 106 may be a plate 106 having a dimension based on the dimension of the openings 104 of the casing 102, such that the cover 106 may not expel out of the openings 104 or the casing 102 under the effect of the pressure waves generated by the explosion. In one or more embodiments, a frame (not shown) comprising slots and having a dimension based on the dimension of the openings 104 of the casing 102 may be fitted over the openings 104 of the casing 102 such that air may flow through the slots of the frame and the corresponding openings 104. Further, the pressure-sensitive retainer 108 may be configured between the frame and the plate/cover 106 such that the first end of the retainer 108 remains coupled to the plate 106 and a second end of the retainer 108 remains coupled to the frame, however, the second end of the retainer 108 may also be attached to the inner walls of the casing 102 in proximity to the corresponding openings 104 when the frame is not employed.

In one or more embodiments, the pressure-sensitive retainer (spring, hinges, and shearing device) 108 and the plate/cover 106 may be made of thermally resistive and non-corrosive material to restrict degradation and false triggering of the pressure-sensitive retainer under the effect of high temperature within or outside the casing 102. The pressure-sensitive retainer 108, the plate/cover 106, and/or the casing 102 of the battery pack system 100 may preferably be made of stainless steel, however, the pressure-sensitive retainer and the plate/cover 106 may also be made of other materials.

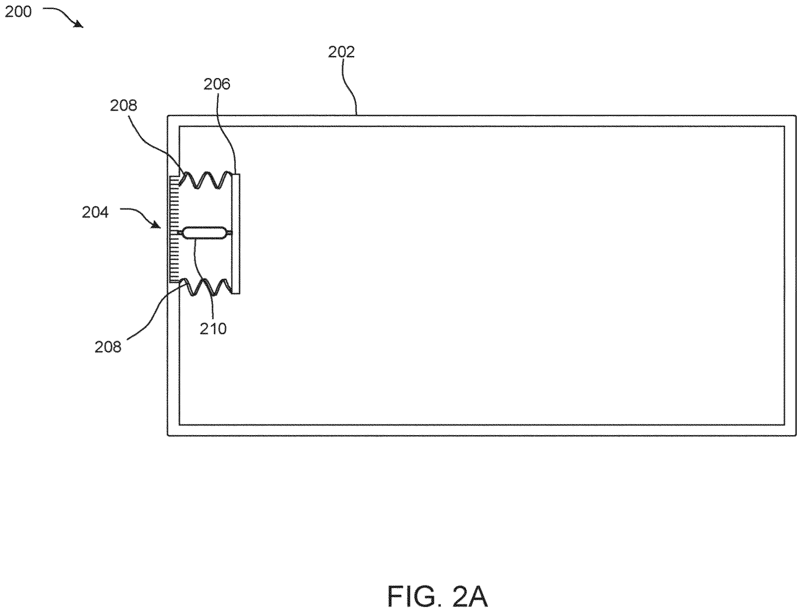

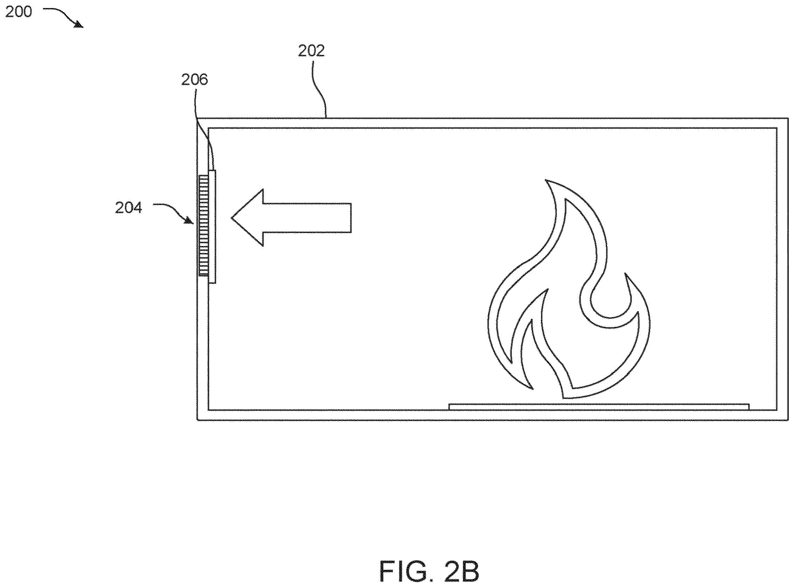

Referring to FIGs. 2A and 2B, a battery pack system 200 having a temperature-sensitive element is disclosed. The battery pack system 200 may include a casing 202 (also referred to as enclosure or housing, herein) that may accommodate battery module(s) and one or more components (not shown) associated with the battery pack system 200. The battery pack system 200 may include at least one opening 204 (collectively referred to as openings 204 or individually referred to as an opening 204, herein) to facilitate the flow of air within the casing 202 to keep the interior of the casing 202 cool. The casing 202 may be of a predefined dimension based on the capacity of the battery pack system 200 and the space where the battery pack system 200 is to be installed.

The battery pack system 200 may further include at least one cover 206 or plates (collectively referred to as covers 206 or plates or individually referred to as cover 206 or plate, herein) movably configured at the openings 204 in the interior of the casing 202, such that one of the cover 206 is associated with one of the opening 204. The battery pack system 200 may be equipped with a protection system that automatically moves the cover 206 to a closed position to close the openings 204 of the casing 202 in an event of a hazard in the interior of the battery pack system 200 as shown in FIG. 2B. The protection system may be an integral part of the battery pack 200 or may be retrofitted in the casing 202 of the battery pack system 200.

The battery pack system 200 or the protection system may include an actuation assembly configured with the covers 206. The actuation assembly may be configured to keep the covers 206 in an open position to keep the openings 204 uncovered during a non-hazard condition as shown in FIG. 2A, and move the covers 206 to the closed position to close the openings 204 in the event of a hazard as shown in FIG. 2B. In the open position, the uncovered openings 204 of the casing 202 may allow ambient air to flow within or through the interior of the casing 202 to facilitate the cooling of the battery pack system 200. Moreover, in the closed position, the covers 206 may completely close the openings 204 of the casing 202, thereby restricting the projection of the internal components and/or the pressure waves and fire out of the battery pack casing 202 through the openings 204. In addition, as all the openings 204 of the casing 202 get closed by the covers 206, the oxygen supply to the battery pack system 200 interior may be reduced or cut off, which may facilitate extinguishing the fire inside the casing 202.

In one or more embodiments, the actuation assembly may include one or more biasing element(s) 208 such as a spring, where a first end of the biasing element(s) 208 may be coupled to the cover 206 and a second end of the biasing element(s) 208 may be configured at the corresponding opening 204 in the interior of the casing 202. The actuation assembly may further include a temperature-sensitive element 210 comprising a first end coupled to the cover 206 and a second end configured at the corresponding opening 204 in the interior of the casing 202. In one or more embodiments, the temperature-sensitive element 210 may include a bulb filled with a fluid that breaks the bulb when temperature of the fluid exceeds a predefined temperature. In other embodiments, the temperature-sensitive element 210 may be a fusible link having a predefined melting point, which may deform when temperature of the fusible link exceeds the predefined melting point.

The temperature-sensitive element 210 may be adapted to retain or keep the cover 206 in the open position during the non-hazard (normal operating) condition as shown in FIG. 2A. Further, in the event of fire or explosion hazard, the temperature-sensitive element may get deformed or may break under the effect of elevated temperature caused by the explosion or fire, which correspondingly enables the biasing elements to pull the cover 206 to the closed position to completely close the openings 204 of the casing 202 as shown in FIG. 2B, thereby restricting the projection of the internal components and/or the pressure waves and fire out of the casing 202 through the openings 204.

In one or more embodiments, the cover 206 may be a plate 206 having a dimension based on the dimension of the openings 204 of the casing 202, such that the cover/plate 206 may not expel out of the openings 204 or the casing 202 under the effect of the pressure waves generated by the explosion. In one or more embodiments, a frame (not shown) comprising slots and having a dimension based on the dimension of the openings 204 of the casing 202 may be fitted over the openings 204 of the casing 202 such that air may flow through the slots of the frame and the corresponding openings 204. Further, the temperature-sensitive element 210 and the biasing element(s) 208 may be configured between the frame and the plate/cover 206 such that the first end of the temperature-sensitive element 210 and the biasing elements 208 remains coupled to the plate and a second end of the temperature-sensitive element 210 and the biasing elements 208 remains coupled to the frame, however, the second end of the temperature-sensitive element 210 or biasing elements 208 may also be attached to the inner walls of the casing 202 in proximity to the corresponding openings 204 when the frame is not employed.

In one or more embodiments, the biasing element 208 and the plate/cover 206 may be made of thermally resistive and non-corrosive material to restrict degradation and false triggering or failure under the effect of high temperature within or outside the casing 202. The biasing element 208, the plate/cover 206, and/or the casing 202 of the battery pack system 200 may preferably be made of stainless steel, however, the biasing element and the plate/cover 206 may also be made of other materials.

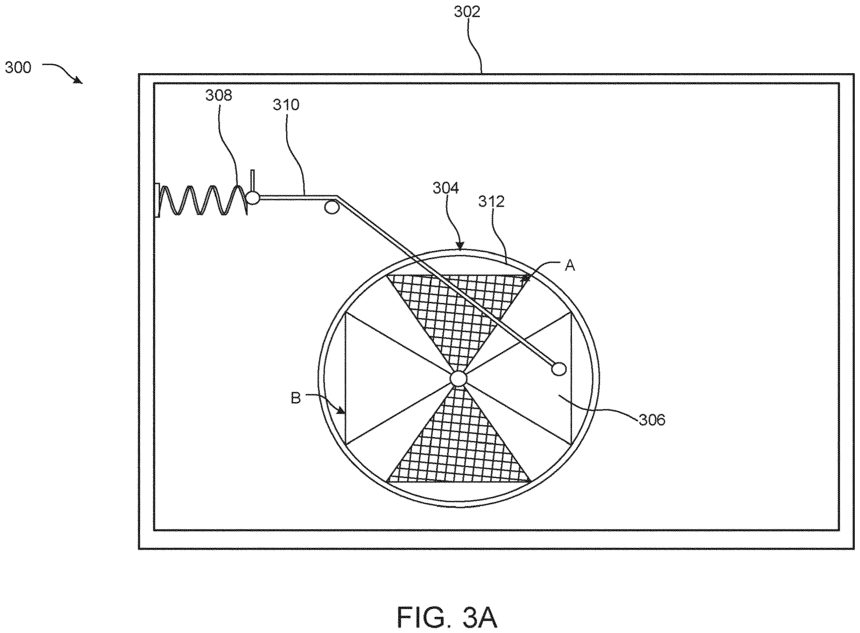

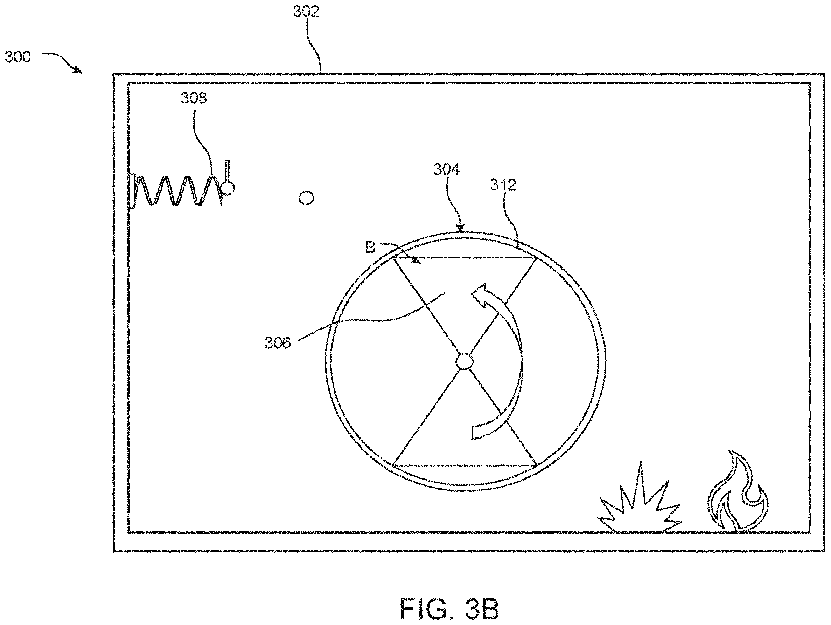

Referring to FIGs. 3A and 3B, a battery pack system 300 having a circular closure plate or cover 306 is disclosed. The battery pack system 300 may include a casing 302 (also referred to as enclosure or housing, herein) that may accommodate battery module(s) and one or more components associated with the battery pack system 300. The battery pack system 300 may include at least one opening 304 (collectively referred to as openings 304 or individually referred to as an opening 304, herein) to facilitate the flow of air within the casing 302 to keep the interior of the casing 302 cool. The casing 302 may be of a predefined dimension based on the capacity of the battery pack system 300 and the space where the battery pack system 300 is to be installed.

The battery pack system 300 may further include at least one movable cover or plate 306 (collectively referred to as covers or plates 306 or individually referred to as cover or plate 306, herein) rotatably configured about an axis at the openings 304 in the interior of the casing 302, such that one of the cover 306 is associated with one of the opening 304. The battery pack system 300 may be equipped with a protection system that automatically rotates the cover 306 about the axis to a closed position to close the openings 304 of the casing 302 in an event of a hazard in the interior of the battery pack system 300 as shown in FIG. 3A. The protection system may be an integral part of the battery pack system 300 or may be retrofitted in the casing 302 of the battery pack system 300.

The battery pack system 300 or the protection system may include an actuation assembly configured with circular rotatable covers/plates. The actuation assembly may be configured to keep the cover 306 in an open position to keep the openings 304 uncovered during a non-hazard condition as shown in FIG. 3A, and automatically rotate the covers to the closed position to close the openings 304 in the event of a hazard as shown in FIG. 3B. In the open position, the uncovered openings 304 of the casing 302 may allow ambient air to flow within or through the interior of the casing 302 to facilitate the cooling of the battery pack system 300. Moreover, in the closed position, the covers 306 may completely close the openings 304 of the casing 302, thereby restricting the projection of the internal components and/or the pressure waves and fire out of the battery pack system 300 casing 302 through the openings 304. In addition, as all the openings 304 of the casing 302 get closed by the covers 306, the oxygen supply to the battery pack system's 300 interior may be reduced or cut off, which may facilitate extinguishing the fire inside the casing 302.

In one or more embodiments, the actuation assembly may include a biasing element 308 such as a spring attached to a wall in the interior of the casing 302. The actuation assembly may further include a retainer 310 comprising a first end connected to the movable plate/cover 306 and a second end connected to the biasing element 308. In one or more embodiments, the retainer 310 may be a pressure-sensitive element and/or a temperature-sensitive element that may break or deform under the effect of elevated temperature and/or pressure waves caused by explosion or fire within the casing 302. In one or more embodiments, the retainer 310 may be a fusible link that may deform when the temperature of the fusible link exceeds the predefined temperature. The retainer 310 may also be a bulb filled with a temperature-sensitive fluid that may break the bulb when the interior temperature of the casing 302 exceeds a predefined temperature during the hazard. Further, the retainer 310 may also be a hinge or shearing element that may break or deform by the pressure waves caused by an explosion or fire within the casing 302.

In the open position, the cover/plate 306 may remain in a biased or torsion state using a spring (not shown), which may normally cause rotation of the cover towards the closed state, however, the retainer 310 and the biasing element 308 may retain or keep the cover 306 in the open position during the non-hazard (normal operating) condition. Further, in the event of a fire or explosion hazard, the retainer 310 may get deformed or may break under the effect of elevated temperature or pressure waves caused by the explosion or fire, which correspondingly detaches the biasing element 308 from the cover/plate 306 and releases the biased cover/plate 306 to the closed position to completely close the openings 304 of the casing 302, thereby restricting the projection of the internal components and/or the pressure waves and fire out of the casing 302 through the openings 304.

In one or more embodiments, the battery pack system 300 may include a circular frame 312 having a dimension based on the dimension of the openings 304 of the casing 302, such that the frame remains locked over the openings 304 of the casing 302. The cover 306 may also be a circular plate 306 configured over the circular frame 312. The circular plate 306 may have a dimension based on the dimension of the openings 304 of the casing 302 and the frame 312, such that the cover 306 may not expel out of the openings 304 or fall inside the casing 302, and remains locked over the openings 304 and the frame 312. In one or more embodiments, the circular frame 312 may include first slot areas (A) that may be open. When the circular plate 306 is at the open position, the first slot areas A of the circular frame 312 may come in line with an open area of the plate 306 to expose the openings 304 and allow the flow of air through the corresponding openings 304. Further, when the circular plate 306 is moved to the closed position upon detachment of the biasing element 308 from the plate 306, the first slot areas A of the circular frame may get covered by solid areas (B) of the circular plate 306 to cover the openings 304 or slot area (A) of the frame and restrict the flow of air or projectiles through the opening 304.

In one or more embodiments, the biasing element 308, and the circular plate 306 may be made of thermally resistive and non-corrosive material to restrict degradation and false triggering or failure under the effect of high temperature within or outside the casing 302. The biasing element 308, the plate/cover 306, and/or the casing 302 of the battery pack system 300 may preferably be made of stainless steel, however, the biasing element and the plate/cover may also be made of other materials.

Thus, the battery pack system of FIGs. 1A to 3B provides a simple, reliable, efficient, and cost-effective battery pack system with a hazard protection system that may be easily installed at openings of the casing to restrict the projection of the internal components and/or the pressure waves and fire out of the battery pack casing in the event of fire or explosion in the interior of the casing. The battery pack allows the cooling of the internal components of the battery pack by keeping the openings of the casing open during normal operating conditions. However, in the event of a fire or explosion hazard, the covers close the openings of the casing, thereby restricting the projection of the internal components and/or the pressure waves and fire out of the battery pack casing through the openings. Moreover, as all the openings of the casing get closed by the covers in the event of a fire or explosion hazard, the oxygen supply to the battery pack interior may be reduced or cut off, which may facilitate extinguishing the fire inside the casing.

In one or more embodiments (not shown), a hazard protection system "system" for a device is disclosed. The device may be one or more of a control panel/box, electrical equipment, or electronic equipment, but is not limited to the like. The system comprises at least one cover adapted to be movably configured at least at one opening associated with a casing of the device in an interior of the casing, such that one of the covers is configured with each of the openings, wherein, in an event of a hazard in the interior of the battery pack, the at least one cover is configured to move to a closed position to close the at least one opening of the casing. The hazard protection system for the device may include the same components and may operate and function the same as the battery pack system 100, 200, 300 as explained in the above embodiments.

While the invention has been described with reference to exemplary embodiments, it will be understood by those skilled in the art that various changes may be made and equivalents may be substituted for elements of the described embodiments without departing from the scope of the invention as defined by the appended claims. Modifications may be made to adopt a particular situation or material to the teachings herein without departing from the scope of the invention. Therefore, it is intended that the invention not be limited to the particular embodiment disclosed, but that the invention includes all embodiments falling within the scope as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

The following clauses set out embodiments of the invention that may or may not presently be claimed, but which may form the basis for future amendment or a divisional application.
1. A battery pack system comprising:
   a casing having an interior and comprising at least one opening; and
   at least one cover disposed in the casing interior and movably configured at the at least one opening, such that one of the cover is associated with one of the opening,
   wherein, in an event of a hazard in the interior of the battery pack system, the one or more cover is configured to move to a closed position to close the at least one opening of the casing.
2. The battery pack system of clause 1, wherein the battery pack system comprises an actuation assembly configured with the at least one cover, wherein the actuation assembly is configured to keep the at least one cover in an open position during a non-hazard condition, and move the at least one cover to the closed position in the event of the hazard.
3. The battery pack system of clause 1, wherein the actuation assembly comprises:
   a pressure-sensitive retainer comprising a first end coupled to the cover and a second end configured at the corresponding opening in the interior of the casing,
   wherein the retainer is adapted to retain the cover at the open position during the non-hazard condition, and
   wherein, in the event of the hazard, the retainer is adapted to be compressed or deformed by pressure waves generated by the hazard to move the cover to the closed position.
4. The battery pack system of clause 3, wherein the pressure-sensitive retainer comprises one or more of a hinge, a spring, and a shearing device.
5. The battery pack system of clause 2, wherein the actuation assembly comprises:
   at least one biasing element, each comprising a first end coupled to the cover and a second end configured at the corresponding opening in the interior of the casing; and
   a temperature-sensitive element comprising a first end coupled to the cover and a second end configured at the corresponding opening in the interior of the casing,
   wherein, during the non-hazard condition, the temperature-sensitive element is adapted to retain the cover at the open position against a biasing force of the at least one biasing element, and
   in the event of the hazard, the temperature-sensitive element is adapted to deform or break and correspondingly enable the at least one biasing element to pull the cover to the closed position.
6. The battery pack system of clause 5, wherein the temperature-sensitive element is a bulb filled with a fluid that is adapted to explode and break the bulb when temperature of the fluid exceeds a predefined temperature.
7. The battery pack system of clause 5, wherein the temperature-sensitive element comprises a fusible link having a predefined melting point, wherein the fusible link is adapted to deform when temperature of the fusible link exceeds the predefined melting point.
8. The battery pack system of clause 1, wherein the at least one cover comprises a movable plate rotatably mounted about an axis at the at least one opening of the casing, and
   the actuation assembly comprises:
   a biasing element attached to a wall in the interior of the casing; and
   a retainer comprising a first end connected to the movable plate and a second end connected to the biasing element,
   wherein, during the non-hazard condition, the biasing element and the retainer are adapted to retain the plate at the open position, and
   in the event of the hazard, the retainer is adapted to deform or break which correspondingly detaches the biasing element from the plate to release the plate and allow rotation of the plate about the axis to move the cover to the closed position.
9. The battery pack system of clause 1, wherein the hazard comprises one or more of an occurrence of fire in the interior of the casing, an increase in temperature of the interior of the casing above a predefined temperature, and an occurrence of an explosion in the interior of the casing of the battery pack system.
10. A hazard protection system for a battery pack, the system comprising:
   at least one cover adapted to be movably configured at least at one opening of a casing associated with the battery pack in an interior of the casing, such that one of the cover is configured with one of the opening,
   wherein, in an event of a hazard in the interior of the battery pack, the at least one cover is configured to move to a closed position to close the at least one opening of the casing.
11. The system of clause 10, wherein the system comprises an actuation assembly configured with the at least one cover, wherein the actuation assembly is configured to keep the at least one cover in an open position during a non-hazard condition, and move the at least one cover to the closed position in the event of the hazard.
12. The system of clause 10, wherein the actuation assembly comprises:
   a pressure-sensitive retainer comprising a first end coupled to the cover and a second end configured at the corresponding opening in the interior of the casing,
   wherein the retainer is adapted to retain the cover at the open position during the non-hazard condition, and
   wherein, in the event of the hazard, the retainer is adapted to be compressed or deformed by pressure waves generated by the hazard to move the cover to the closed position.
13. The system of clause 12, wherein the pressure-sensitive retainer comprises one or more of a hinge, a spring, and a shearing device.
14. The system of clause 10, wherein the actuation assembly comprises:
   at least one biasing element, each comprising a first end coupled to the cover and a second end configured at the corresponding opening in the interior of the casing; and
   a temperature-sensitive element comprising a first end coupled to the cover and a second end configured at the corresponding opening in the interior of the casing,
   wherein, during the non-hazard condition, the temperature-sensitive element is adapted to retain the cover at the open position against a biasing force of the at least one biasing element, and
   in the event of the hazard, the temperature-sensitive element is adapted to deform or break and correspondingly enable the at least one biasing element to pull the cover to the closed position.
15. The system of clause 14, wherein the temperature-sensitive element is a bulb filled with a fluid that is adapted to explode and break the bulb when temperature of the fluid exceeds a predefined temperature.
16. The system of clause 14, wherein the temperature-sensitive element comprises a fusible link having a predefined melting point, wherein the fusible link is adapted to deform when temperature of the fusible link exceeds the predefined melting point.
17. The system of clause 10, wherein the at least one cover comprises a movable plate rotatably mounted about an axis at the at least one opening of the casing, and
   the actuation assembly comprises:
   a biasing element attached to a wall in the interior of the casing; and
   a retainer comprising a first end connected to the movable plate and a second end connected to the biasing element,
   wherein, during the non-hazard condition, the biasing element and the retainer are adapted to retain the plate at the open position, and
   in the event of the hazard, the retainer is adapted to deform or break which correspondingly detaches the biasing element from the plate to release the plate and allow rotation of the plate about the axis to move the cover to the closed position.
18. The system of clause 10, wherein the hazard comprises one or more of an occurrence of fire in the interior of the casing, an increase in temperature of the interior of the casing above a predefined temperature, and an occurrence of an explosion in the interior of the casing of the battery pack.
19. A hazard protection system for a device, the system comprising:
   at least one cover adapted to be movably configured at least at one opening associated with a casing of the device in an interior of the casing, such that one of the covers is configured with the at least one opening,
   wherein, in an event of a hazard in the interior of the battery pack, the at least one cover are configured to move to a closed position to close the at least one opening of the casing.
20. The system of clause 19, wherein the hazard comprises one or more of an occurrence of: fire in the interior of the casing, an increase in temperature of the interior of the casing above a predefined limit, and an occurrence of an explosion in the interior of the casing of the battery pack.

## Claims

1. A battery pack system (100;200;300), comprising:
a casing (102;202;302) having an interior and comprising at least one opening (104;204;304); and
at least one cover (106) disposed in the casing interior and movably configured at the at least one opening, such that one of the at least one cover is associated with one of the opening,
wherein, in an event of a hazard in the interior of the battery pack system, the one or more cover is configured to move to a closed position to close the at least one opening of the casing.

2. A hazard protection system for a device, the system comprising:
at least one cover adapted to be movably configured at least at one opening of a casing associated with the device in an interior of the casing, such that one of the cover is associated with one of the opening,
wherein, in an event of a hazard in the interior of the device, the at least one cover is configured to move to a closed position to close the at least one opening of the casing.

3. The system of claim 2, wherein the device is a battery pack.

4. The system of any preceding claim, wherein the system comprises an actuation assembly configured with the at least one cover, wherein the actuation assembly is configured to keep the at least one cover in an open position during a non-hazard condition, and move the at least one cover to the closed position in the event of the hazard.

5. The system of claim 4, wherein the actuation assembly comprises:
a pressure-sensitive retainer (108) comprising a first end coupled to the cover and a second end configured at the corresponding opening in the interior of the casing,
wherein the pressure-sensitive retainer is adapted to retain the cover at the open position during the non-hazard condition, and
wherein, in the event of the hazard, the pressure-sensitive retainer is adapted to be compressed or deformed by pressure waves generated by the hazard to move the cover to the closed position.

6. The system of claim 5, wherein the pressure-sensitive retainer comprises one or more of a hinge, a spring, and a shearing device.

7. The system of claim 4, wherein the actuation assembly comprises:
at least one biasing element (208;308), each comprising a first end coupled to the cover and a second end configured at the corresponding opening in the interior of the casing; and
a temperature-sensitive element (210;310) comprising a first end coupled to the cover and a second end configured at the corresponding opening in the interior of the casing,
wherein, during the non-hazard condition, the temperature-sensitive element is adapted to retain the cover at the open position against a biasing force of the at least one biasing element, and
in the event of the hazard, the temperature-sensitive element is adapted to deform or break and correspondingly enable the at least one biasing element to pull the cover to the closed position.

8. The system of claim 5, wherein the temperature-sensitive element is a bulb (210) filled with a fluid that is adapted to explode and break the bulb when temperature of the fluid exceeds a predefined temperature.

9. The system of claim 7, wherein the temperature-sensitive element comprises a fusible link (310) having a predefined melting point, wherein the fusible link is adapted to deform when temperature of the fusible link exceeds the predefined melting point.

10. The system of any of claims 4 to 9, wherein the at least one cover comprises a movable plate rotatably mounted about an axis at the at least one opening of the casing, and
the actuation assembly comprises:
a biasing element attached to a wall in the interior of the casing; and
a retainer comprising a first end connected to the movable plate and a second end connected to the biasing element,
wherein, during the non-hazard condition, the biasing element and the retainer are adapted to retain the plate at the open position, and
in the event of the hazard, the retainer is adapted to deform or break which correspondingly detaches the biasing element from the plate to release the plate and allow rotation of the plate about the axis to move the cover to the closed position.

11. The battery pack system of any preceding claim, wherein the hazard comprises one or more of an occurrence of fire in the interior of the casing, an increase in temperature of the interior of the casing above a predefined temperature, and an occurrence of an explosion in the interior of the casing of the battery pack system or the casing of the device.
